# EUROPÄISCHE PATENTSCHRIFT

(11) **EP 2 982 660 B1**
(45) Veröffentlichungstag und Bekanntmachung des Hinweises auf die Patenterteilung: **10.10.2018**
(21) Anmeldenummer: 14180309.8
(22) Anmeldetag: 08.08.2014
(51) Int. Cl.: C04B 30/00, C04B 41/49, C04B 30/02, C04B 32/00

(54) **VERFAHREN ZUR HERSTELLUNG EINES HYDROPHOBEN WÄRMEDÄMM-FORMKÖRPERS**
METHOD FOR PRODUCING MOULDED HYDROPHOBIC HEAT INSULATION FORMS
PROCÉDÉ DE FABRICATION D'UN CORPS DE MOULAGE D'ISOLATION THERMIQUE HYDROPHOBE

(43) Veröffentlichungstag der Anmeldung: 10.02.2016
(73) Patentinhaber: Evonik Degussa GmbH, 45128 Essen (DE)
(72) Erfinder: Albinus, Uwe, 61118 Bad Vilbel (DE); Dänner, Johannes, 98634 Kaltensundheim (DE); Dannehl, Manfred, 63796 Kahl am Main (DE); Schindler, Matthias, 45897 Gelsenkirchen (DE); Gärtner, Gabriele, 63454 Hanau (DE)

(56) Entgegenhaltungen:
- EP-A2- 1 988 228
- WO-A1-2013/013714
- DE-A1-102007 042 000
- DE-A1-102010 005 800

## Beschreibung

Die Erfindung betrifft ein Verfahren zur Herstellung eines hydrophoben Kieselsäure enthaltenden Wärmedämm-Formkörpers.

Es ist dem Fachmann bekannt, dass sich hydrophobe Kieselsäuren nicht ausreichend verdichten lassen und nicht verpressbar sind. Ebenfalls ist eine Verpressung einer mit hydrophober Kieselsäure versehenen Mischung nicht möglich.

In EP-A-1988228 wird daher vorgeschlagen Organosilane während des Mischvorganges einer Wärmedämm-Mischung auf Basis von pyrogener Kieselsäure, Trübungsmittel und Fasermaterialien zuzusetzen. Dabei ist eine intensive, homogene Durchmischung der Komponenten wichtig, um eine vollständige Hydrophobierung zu erreichen. Unmittelbar nach der Zugabe ist diese Mischung verform- und verpressbar. Die Reaktion der Organosilane mit den Silanolgruppen der Kieselsäure findet dabei während des Pressvorganges oder unmittelbar danach statt.

WO2011/069923 offenbart zur Hydrophobierung einer pyrogenen Kieselsäure enthaltenden Wärmedämm-Mischung schwerflüchtige Organosilane oder Organosiloxane einzusetzen. Diese adsorbieren auf den pulverförmigen Einzelbestandteilen der Wärmedämm-Mischung ohne dass eine nachfolgende chemische Reaktion während oder nach einem Pressvorgang stattfindet.

In WO2011/150987 schließlich werden feste Hydrophobierungsmittel, deren Erweichungspunkt zwischen -30°C und 600°C liegt, zur Herstellung von Wärmedämm-Platten eingesetzt.

Es hat sich gezeigt, dass bei den genannten Verfahren, bei denen das Hydrophobierungsmittel vor dem Pressvorgang zugegeben wird, es schwierig ist stabile Formkörper zu erhalten, insbesondere dann, wenn bei der Hydrophobierung gasförmige Produkte entstehen.

Es wird daher auch in WO2013/013714 vorgeschlagen, die Hydrophobierung nach dem Pressvorgang durchzuführen. Dabei wird der nach dem Pressvorgang in einer Kammer vorliegende, hydrophile Formkörper mit wenigstens einem dampfförmigen Organosilan mittels Unter- oder Überdruck behandelt.

Die im Stand der Technik genannten Verfahren, die zu hydrophoben Wärmedämm-Formkörpern führen, nämlich die Zugabe des Hydrophobierungsmittels zur pulverförmigen Wärmedämm-Mischung vor der Verpressung und die Hydrophobierung nach der Verpressung zu Wärmedämm-Formkörpern weisen beide Nachteile auf.

Nachteilig bei den Verfahren, bei denen das Hydrophobierungsmittel vor der Verpressung zugegeben wird, ist eine schwierig zu kontrollierende Erhöhung der Dichte der Kieselsäuren während der Verpressung mit einhergehender Inhomogenität der Materialverteilung, sowie einer schwankenden mechanischen Stabilität der Formkörper.

Nachteilig bei den Verfahren, bei denen die Hydrophobierung nach der Verpressung erfolgt, ist ein zusätzlich notwendiger Prozessschritt und die ungleichmäßige und unvollständige Durchdringung des verpressten Materials. Bei Verfahren, die mit Überdruck arbeiten, ist insbesondere eine Schädigung des Materials zu beobachten.

Die technische Aufgabe der vorliegenden Erfindung bestand daher darin, ein Verfahren zur Herstellung eines hydrophoben Wärmedämm-Formkörpers bereitzustellen, welches diese Nachteile minimiert.

Weiterhin wäre es wünschenswert, wenn dieses Verfahren kontinuierlich durchgeführt werden könnte. In WO 2005/028195 ist die kontinuierliche Herstellung hydrophiler Wärmedämm-Platten mittels einer Bandpresse vorgesehen. Es hat sich jedoch gezeigt, dass die kontinuierliche Hydrophobierung dieser Wärmedämm-Platten dort nicht gelingt.

Es war daher eine weitere technische Aufgabe der vorliegenden Erfindung ein Verfahren bereitzustellen, welches die kontinuierliche Herstellung von hydrophoben Wärmedämm-Platten erlaubt.

Gegenstand der Erfindung ist ein Verfahren zur Herstellung eines hydrophoben Wärmedämm-Formkörpers, bei dem man einen hydrophilen Wärmedämm-Formkörper, der aus einer Wärmedämm-Mischung besteht, die eine hochdisperse Kieselsäure, IR-Trübungsmittel und Fasermaterial enthält, mit einem dampfförmigen Hydrophobierungsmittel unter Bildung eines mit Hydrophobierungsmittel belegten Wärmedämm-Formkörpers in Kontakt bringt, nachfolgend diesen verpresst und während des Verpressens und im Anschluß an das Verpressen mit dem Hydrophobierungsmittel unter Bildung des hydrophoben Wärmedämm-Formkörpers zur Reaktion bringt, wobei
der hydrophobe Wärmedämm-Formkörper nach dem Verpressen und nach der Reaktion mit dem Hydrophobierungsmittel eine Dichte von 100 - 250 kg/m³, bevorzugt 130 - 200 kg/m³, aufweist, wobei
der Wärmedämmkörper eine Wärmedämmplatte ist, und das Verfahren kontinuierlich durchgeführt wird indem das Inkontaktbringen, das Verpressen und die Hydrophobierungsreaktion zwischen zwei gasdurchlässigen, laufenden Bändern einer Presse erfolgen, wobei das Inkontaktbringen der hydrophilen Wärmedämmplatte mit dem Hydrophobierungsmittel und die Reaktion des Hydrophobierungsmittel in einer das Band umgebenden Kammer dann erfolgt, wenn bei Inkontaktbringen mit dem Hydrophobierungsmittel die hydrophile Wärmedämmplatte eine Dichte besitzt, die 50% bis weniger als 100%, bevorzugt 50 - 99%, besonders bevorzugt 60 - 95%, ganz besonders bevorzugt 70 - 90%, der Dichte des hydrophoben Wärmedämm-Formkörpers beträgt, und die mit Hydrophobierungsmittel belegte, hydrophile Wärmedämmplatte zur Enddichte verpresst und dabei und im Anschluss an das Verpressen bei erhöhter Temperatur zur Reaktion gebracht wird, wobei die Temperatur des Inkontaktbringens T_{Kontakt}-30°C - 150°C und die Reaktionstemperatur T_{Reaktion} 50°C - 500°C ist.

Essentielles Merkmal der Erfindung ist das Inkontaktbringen eines dampfförmigen Hydrophobierungsmittels mit einem hydrophilen Wärmedämm-Formkörper. Gegenüber dem Stand der Technik, in dem das Hydrophobierungsmittel vor dem Verpressen zu einer pulverförmigen Wärmedämm-Mischung gegeben wird, erlaubt das erfindungsgemäße Verfahren die Herstellung eines gleichmäßig und durchgehend hydrophoben Wärmedämm-Formkörpers.

Unter einem hydrophoben Wärmedämm-Formkörper ist zu verstehen, dass dieser bei Bestimmung der Wasser-Methanolbenetzbarkeit bei 15 Vol.-% Methanol oder mehr eine Sedimentbildung aufweist, bevorzugt bei 20 Vol.-% Methanol oder mehr, besonders bevorzugt bei 25 Vol.-% Methanol oder mehr, insbesondere bei 25 - 50 Vol.-% Methanol.
Bei der Bestimmung der Wasser-Methanolbenetzbarkeit werden in transparente Zentrifugenröhrchen jeweils Teile aus unterschiedlichen Bereichen des hydrophoben Wärmedämm-Formkörpers, jeweils 0,2 g ± 0,005 g, eingewogen. Es werden zu jeder Einwaage 8,0 ml eines Methanol/Wasser Gemisches mit jeweils 10, 20, 30, 40, 50, 60, 70 und 80 Vol.-% Methanol zugegeben. Die verschlossenen Röhrchen werden 30 Sekunden geschüttelt und anschließend 5 Minuten bei 2500 min⁻¹ zentrifugiert. Die Sedimentvolumina werden abgelesen, in Prozent umgerechnet und graphisch gegen den Methanolgehalt (Vol.-%) aufgetragen. Der hier beschriebene Wert der Wasser-Methanolbenetzbarkeit entspricht dem Wendepunkt dieser Kurve. Je höher der Wert des Methanolgehalts (Vol-%) ist, desto größer ist die Hydrophobie.
Entsprechend gilt ein Wärmedämm-Formkörper, der eine Sedimentbildung bei einem Methanolgehalt von 15 Vol.-% oder mehr aufweist, als hydrophil. Der hydrophile Wärmedämm-Formkörper wird durch Verdichten der Wärmedämm-Mischung erhalten.
Ein hydrophiler Wärmedämm-Formkörper wird durch Reaktion der Oberflächen-Hydroxylgruppen wenigstens eines seiner Bestandteile mit einem Hydrophobierungsmittel zu einem hydrophoben Wärmedämm-Formkörper umgewandelt.
Gemäß der Erfindung sind hydrophile und hydrophobe Wärmedämm-Formkörper in sich stabile, handhabbare Gebilde, während die Wärmedämm-Mischung aus pulverförmigen Bestandteilen und Fasern besteht. Die Bestandteile der Wärmedämm-Mischung sind weitestgehend homogen im hydrophilen wie hydrophoben Wärmedämmformkörper verteilt.

Wärmedämm-Mischung und Wärmedämm-Formkörper enthalten vorzugsweise nur untergeordnete Mengen an Bindemittel oder sind gänzlich frei davon. Unter untergeordnet ist zu verstehen, dass diese Anteile keinen signifikanten Beitrag zur Stabilität des Wärmedämmformköpers leisten.

Gemäß der Erfindung wird der hydrophile Wärmedämm-Formkörper mit einem Hydrophobierungsmittel in Kontakt gebracht. Bei diesem Inkontaktbringen wird die Temperatur T_{Kontakt} so gewählt, dass keine oder nur eine untergeordnete Hydrophobierungsreaktion stattfindet. In der Regel ist T_{Kontakt} kleiner oder gleich 80% der Reaktionstemperatur des jeweiligen Hydrophobierungsmittels. T_{Kontakt} beträgt bevorzugt 20 bis 100°C.

Während des nachfolgenden Verpressens und im Anschluß daran wird das Hydrophobierungsmittel mit reaktiven Gruppen auf der Oberfläche der Komponenten der Wärmedämm-Mischung unter Bildung des hydrophoben Wärmedämm-Formkörpers reagieren. Die Temperatur T_{Reaktion} hängt unter anderem von der Art des Hydrophobierungsmittels ab. T_{Reaktion} beträgt bevorzugt 100 - 300 °C.

Die Dauer des Inkontaktbringens und die Dauer der Reaktion betragen bevorzugt jeweils 1 Minute bis 1 Stunde, besonders bevorzugt 5 - 10 Minuten.

Das erfindungsgemäße Verfahren wird bevorzugt so ausgeführt, dass das Inkontaktbringen und die Reaktion des Hydrophobierungsmittels mit dem hydrophilen Wärmedämm-Formkörper in einer Kammer erfolgt, wobei das Hydrophobierungsmittel solange in die Kammer eingebracht wird bis die Druckdifferenz Δp ≥ 20 mbar beträgt, mit Δp = p₂ - p₁, und p₁ = Druck in der Kammer vor Einbringen des Hydrophobierungsmittels, p₂ = Druck in der Kammer bei der das Einbringen des Hydrophobierungsmittels gestoppt wird. Das erfindungsgemäße Verfahren wird so ausgeführt, dass bevorzugt 200 mbar ≤ Δp ≤ 5 bar, besonders bevorzugt 500 mbar ≤ Δp ≤ 2000 mbar, ganz besonders bevorzugt 500 mbar ≤ Δp ≤ 1000 mbar ist.

In einer besonderen Ausführungsform der Erfindung wird das Verfahren so ausgeführt, dass Druck in der Kammer vor Einbringen des Hydrophobierungsmittels kleiner als Atmosphärendruck ist. Insbesondere ist es günstig, wenn 0,1 mbar ≤ p1 ≤ Atmosphärendruck ist. Besonders bevorzugt ist eine Variante bei der 1 mbar ≤ p1 ≤ 500 mbar ist. Bei dieser besonderen Ausführungsform erfolgt das Einbringen des Hydrophobierungsmittels also in eine evakuierte Kammer. Bei diesem Unterdruckverfahren wird das Hydrophobierungsmittel selbst in die feinsten Poren des hydrophilen Wärmedämm-Formkörpers "gesaugt" und optimal verteilt.

In einer weiteren besonderen Ausführungsform der Erfindung wird das Verfahren so ausgeführt, dass Druck in der Kammer vor Einbringen des Hydrophobierungsmittels Atmosphärendruck oder mehr beträgt. In diesem Fall ist es günstig, wenn Atmosphärendruck ≤ p1 ≤ 10 bar ist. Bei diesem Überdruckverfahren wird das Hydrophobierungsmittel in die Poren des hydrophilen Wärmedämm-Formkörpers "gedrückt" und dadurch optimal verteilt.

Gemäß der Erfindung werden hochdisperse Kieselsäuren eingesetzt. Diese weisen eine spezielle Struktur auf. Primärteilchen mit einer Größe von 5 - 50 nm verwachsen zu größeren Aggregaten, die sich wiederum zu noch größeren Strukturen, den Agglomeraten, zusammenlagern.

Bevorzugt können pyrogene Kieselsäuren eingesetzt werden. Sie werden durch Flammenhydrolyse von flüchtigen Siliciumverbindungen wie organischen und anorganischen Chlorsilanen hergestellt. Bei diesem Verfahren wird ein verdampftes oder gasförmiges, hydrolysierbares Siliciumhalogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Eine so hergestellte Kieselsäure wird als pyrogene Kieselsäure bezeichnet. Bei diesem Prozess werden zunächst Primärpartikel gebildet, die nahezu frei von inneren Poren sind. Diese Primärteilchen verschmelzen während des Prozesses über sogenannte "Sinterhälse" zu Aggregaten. Aufgrund dieser Struktur ist pyrogen hergestellte Kieselsäure ein idealer Wärmedämmstoff, da die Aggregatstruktur eine hinreichende mechanische Stabilität bewirkt, die Wärmeübertragung durch Festkörperleitfähigkeit über die "Sinterhälse" minimiert und eine ausreichend hohe Porosität erzeugt. Die BET-Oberfläche der pyrogenen Kieselsäure kann 50 - 1000 m²/g betragen. Besonders bevorzugt werden pyrogene Kieselsäuren mit einer BET-Oberfläche von 150 - 600 m²/g, ganz besonders bevorzugt solche mit 200 - 400 m²/g eingesetzt.

Für das erfindungsgemäße Verfahren können ebenso Fällungskieselsäuren eingesetzt werden. Diese werden erhalten durch Reaktion eines Alkaliwasserglases mit Schwefelsäure. Der Niederschlag wird filtriert, gewaschen und getrocknet. Die BET-Oberfläche der gefällten Kieselsäure kann 20 - 2000 m²/g betragen. Fällungskieselsäuren haben sich als weniger wirksam in der Anwendung als Wärmedämm-Formkörper erwiesen als pyrogenen Kieselsäuren. Allerdings stellt die in WO2010/091921 offenbarte Fällungskieselsäure mit einer modifizierten Stampfdichte von 70 g/l oder weniger eine Alternative zu pyrogenen Kieselsäuren dar.
Der Anteil der hochdispersen Kieselsäure beträgt bevorzugt 70 - 95 Gew.-%, bezogen auf die Wärmedämm-Mischung.

Das Trübungsmittel wird bevorzugt aus der Gruppe bestehend aus Titanoxid, Zirkonoxid, Ilmenit, Eisentitanat, Eisenoxid, Zirkonsilikat, Siliciumcarbid, Manganoxid und Ruß ausgewählt. Vorzugsweise weisen diese Trübungsmittel im Infrarot-Spektralbereich ein Maximum zwischen 1,5 und 10 µm auf. Die Partikelgröße dieser Teilchen liegt vorzugsweise zwischen 0,5 - 15 µm. Ihr Anteil an der Wärmedämm-Mischung beträgt bevorzugt 2 - 20 Gew.-%.

Zur mechanischen Verstärkung werden Fasern eingesetzt. Diese Fasern können anorganischen oder organischen Ursprungs sein. Beispiele einsetzbarer anorganischer Fasern sind Glaswolle, Steinwolle, Basalt-Fasern, Schlacken-Wolle und keramische Fasern, die aus Schmelzen von Aluminium und/oder Siliciumdioxid, sowie weiteren anorganischen Metalloxiden bestehen. Reine Siliciumdioxidfasern sind beispielsweise Silica-Fasern. Beispiele einsetzbarer organischer Fasern sind Cellulosefasern, Textilfasern oder Kunststofffasern. Der Durchmesser der Fasern beträgt bevorzugt 1 - 12 µm, besonders bevorzugt 6 - 9 µm und die Länge bevorzugt 1 - 25 mm, besonders bevorzugt 3 - 10 mm.

Der Anteil des Fasermateriales beträgt bevorzugt 3 - 10 Gew.-%, bezogen auf die Wärmedämm-Mischung.

Weiterhin kann die Wärmedämm-Mischung anorganische Füllmaterialien enthalten. Zum Einsatz kommen können Lichtbogenkieselsäuren, SiO₂-haltige Flugstäube, die durch Oxidationen von flüchtigem Siliciummonoxid, die bei der elektrochemischen Herstellung von Silicium oder Ferrosilicium entstehen. Ferner können natürlich vorkommende SiO₂-haltige Verbindungen wie Diatomeenerden und Kieselguren zum Einsatz kommen. Ebenfalls können thermisch aufgeblähte Mineralien wie Perlite und Vermiculite, feinteilige Metalloxide wie Aluminiumoxid, Titandioxid, Eisenoxid zugesetzt werden. Der Anteil der anorganischen Füllmaterialien beträgt bevorzugt nicht mehr als 10 Gew.-%, bezogen auf die Wärmedämm-Mischung. In einer besonders bevorzugten Ausführungsform ist die Wärmedämm-Mischung weitestgehend frei von diesen anorganischen Zusatzstoffen.

Als Hydrophobierungsmittel kommen vor allem Organosilane in Frage. Deren Auswahl ist nicht beschränkt, es gilt jedoch zu beachten, dass das Hydrophobierungsmittel gemäß der Erfindung dampfförmig angewendet wird. Bevorzugt können ein oder mehrere Organosilane aus der Gruppe bestehend aus Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X = -Cl, -Br; -OCH₃, -OC₂H₅, -OC₃H₈, Y= NH, O eingesetzt werden. Explizit seien (CH₃)₃SiCl, (CH₃)₂SiCl₂, CH₃SiCl₃, (CH₃)₃SiOC₂H₅, (CH₃)₂Si(OC₂H₅)₂, CH₃Si(OC₂H₅)₃, (CH₃)₃SiNHSi(CH₃)₃, (CH₃)₃SiOSi(CH₃)₃, die cyclischen Siloxane (CH₃)₈Si₄O₄ und (CH₃)₆Si₃O₃, und das niedrigmolekulare Polysiloxanol (CH₃)₃Si(OSi(CH₃)₂)₄OH genannt. Besonders bevorzugt werden (CH₃)₃SiCl, (CH₃)₂SiCl₂, CH₃SiCl₃, (CH₃)₃SiNHSi(CH₃)₃ und (CH₃)₈Si₄O₄ eingesetzt. Der Anteil des Hydrophobierungsmittels beträgt bevorzugt 0,5 - 10 Gew.-%, bevorzugt 1 - 7 Gew.-%, bezogen auf den hydrophilen Wärmedämm-Formkörper.

Die Erfindung sieht vor, das Verfahren kontinuierlich durchgeführt wird, wobei der hydrophobe Wärmedämm-Formkörper eine hydrophobe Wärmedämm-Platte, bevorzugt mit einer Dicke von 1 - 20 cm, ist und bei dem das Inkontaktbringen, das Verpressen und die Hydrophobierungsreaktion zwischen zwei gasdurchlässigen, laufenden Bändern einer Presse erfolgen.
Die Bereitstellung der hydrophilen Wärmedämm-Platte durch Verpressen der Wärmedämm-Mischung kann dabei wie in WO2005/028195 offenbart, durchgeführt werden. Dabei wird die Wärmedämm-Mischung auf ein gasdurchlässiges Band aufgegeben.
Das Inkontaktbringen der so hergestellten hydrophilen Wärmedämm-Platte mit dem Hydrophobierungsmittel und die Reaktion des Hydrophobierungsmittels erfolgt in einer das Band umgebenden Kammer. Dies ermöglicht, dass das Hydrophobierungsmittel mittels Unterdruck oder Überdruck durch die hydrophile Wärmedämm-Platte geführt werden kann. Die mit Hydrophobierungsmittel belegte, hydrophile Wärmedämm-Platte wird dann zur Enddichte verpresst und dabei und im Anschluß an das Verpressen bei erhöhter Temperatur zur Reaktion gebracht.
Das gasdurchlässige Band besteht beispielsweise aus einem festen Band, bevorzugt Stahl, ohne Bohrungen, auf dem sich mindestens ein Gittergewebe mit einem Porendurchmesser 100 µm - 30 mm, auf welchem sich mindestens ein Vlies oder Gewebe mit einem Porendurchmesser von 10 µm - 450 µm befindet. Der Aufbau des zweiten Bandes ist spiegelbildlich dem ersten Band. Diese Ausführung ermöglicht durch die Verpressung der Wärmedämm-Mischung freigesetzte Luft, als auch gasförmige Reaktionsprodukte, die bei der Hydrophobierungsreaktion gebildet werden, beispielsweise Chlorwasserstoff oder Ammoniak, zu entfernen.

### Beispiele

Es wird eine Wärmedämm-Mischung bestehend aus 77,7 Gew.-% AEROSIL®300, Evonik Industries, 19,4 Gew.-% Siliziumcarbid Typ 900F, Keyvest und 2,9 Gew.-% Glasfasern Typ BELCOTEX 225 SC6, Belchem eingesetzt.
Mit einem Presswerkzeug bestehend aus Pressmatrize, Sinterplatte und Deckel wird die Wärmedämm-Mischung zu Platten der Dimension 140x90x20 mm verpresst. Die angestrebte Enddichte der Wärmedämmplatten ist 165 kg/m³.

Beispiel 1 (Vergleichsbeispiel): Die Wärmedämm-Mischung wird mittels des Preßwerkzeuges zu einer Platte mit der Enddichte von 165kg/m³ verpresst.

Nachfolgend werden Preßwerkzeug und Platte auf 165°C geheizt. Währenddessen werden 20 g Hexamethyldisilazan (HMDS) verdampft. Die Pressmatrize wird auf einen Unterdruck von 6 mbar evakuiert und das verdampfte HMDS durch die Platte gesaugt. Nach 10 min kann nach der Entspannung eine Platte entnommen werden. Die Bestimmung der Wasser-Methanolbenetzbarkeit verschiedener Proben dieser Platte zeigt eine ausreichend gute Hydrophobierung.

Beispiel 2: Die Wärmedämmmischung wird mittels des Preßwerkzeuges zu einer Platte mit einer Dichte von 130 kg/m³, entsprechend 80% der Enddichte, verpresst. Preßwerkzeug und Platte weisen eine Temperatur von ca. 20°C auf. 20 g HMDS werden verdampft. Die Pressmatrize wird auf einen Unterdruck von 6 mbar evakuiert und das verdampfte HMDS durch die Platte gesaugt. Nach 10 min erfolgt die Verdichtung auf die Enddichte von 165kg/m³ und anschließend das Aufheizen der Platte auf 165°C. Nach 10 min kann eine hydrophobe Platte entnommen werden. Die Bestimmung der Wasser-Methanolbenetzbarkeit verschiedener Proben dieser Platte zeigt eine gleichmäßige, durchgehende Hydrophobierung. Die Wasser-Metanolbenetzbarkeit beträgt ca. 30 Vol.-% Methanol.

Beispiel 3: Die Wärmedämmmischung wird mittels des Preßwerkzeuges zu einer Platte mit einer Dichte von 100 kg/m³, entsprechend 60% der Enddichte, verpresst. Preßwerkzeug und Platte weisen eine Temperatur von ca. 80°C auf. 20 g HMDS werden verdampft. Die Pressmatrize wird auf einen Unterdruck von 6 mbar evakuiert und das verdampfte HMDS durch die Platte gesaugt. Nach 10 min erfolgt die Verdichtung auf die Enddichte von 165kg/m³ und anschließend das Aufheizen der Platte auf 165°C. Die Bestimmung der Wasser-Methanolbenetzbarkeit verschiedener Proben dieser Platte zeigt eine gleichmäßige, durchgehende Hydrophobierung.
Die Wasser-Metanolbenetzbarkeit beträgt ca. 30 Vol.-% Methanol.

## Patentansprüche

1. Verfahren zur Herstellung eines hydrophoben Wärmedämm-Formkörpers, bei dem man einen hydrophilen Wärmedämm-Formkörper, der aus einer Wärmedämm-Mischung besteht, die eine hochdisperse Kieselsäure, IR-Trübungsmittel und Fasermaterial enthält,
mit einem dampfförmigen Hydrophobierungsmittel unter Bildung eines mit Hydrophobierungsmittel belegten Wärmedämm-Formkörpers in Kontakt bringt, nachfolgend diesen verpresst und während des Verpressens und
im Anschluß an das Verpressen mit dem Hydrophobierungsmittel unter Bildung des hydrophoben Wärmedämm-Formkörpers zur Reaktion bringt, wobei der hydrophobe Wärmedämm-Formkörper nach dem Verpressen und nach der Reaktion mit dem Hydrophobierungsmittel eine Dichte von 100 - 250 kg/m³ aufweist,
**dadurch gekennzeichnet, dass**
der Wärmedämmkörper eine Wärmedämmplatte ist, und
das Verfahren kontinuierlich durchgeführt wird indem
das Inkontaktbringen, das Verpressen und die Hydrophobierungsreaktion zwischen zwei gasdurchlässigen, laufenden Bändern einer Presse erfolgen,
wobei das Inkontaktbringen der hydrophilen Wärmedämmplatte mit dem Hydrophobierungsmittel und die Reaktion des Hydrophobierungsmittel in einer das Band umgebenden Kammer dann erfolgt, wenn bei Inkontaktbringen mit dem Hydrophobierungsmittel die hydrophile Wärmedämmplatte eine Dichte besitzt, die 50% bis weniger als 100% der Dichte des hydrophoben Wärmedämm-Formkörpers beträgt, und die mit Hydrophobierungsmittel belegte, hydrophile Wärmedämmplatte zur Enddichte verpresst und im Anschluss an das Verpressen bei erhöhter Temperatur zur Reaktion gebracht wird, wobei
die Temperatur des Inkontaktbringens T_{Kontakt} -30°C - 150°C und
die Reaktionstemperatur T_{Reaktion} 50°C - 500°C ist.

2. Verfahren nach Anspruch 1 , **dadurch gekennzeichnet, dass** die Dauer des Inkontaktbringens und die Dauer der Reaktion jeweils 1 Minute bis 1 Stunde beträgt.

3. Verfahren nach den Ansprüchen 1 oder 2, **dadurch gekennzeichnet, dass** das Inkontaktbringen und die Reaktion des Hydrophobierungsmittels mit dem hydrophilen Wärmedämm-Formkörper in einer Kammer erfolgt, wobei das Hydrophobierungsmittel solange in die Kammer eingebracht wird bis die Druckdifferenz Δp ≥ 20 mbar beträgt, mit Δp = p₂ - p₁, und p₁ = Druck in der Kammer vor Einbringen des Hydrophobierungsmittels, p₂ = Druck in der Kammer bei der das Einbringen des Hydrophobierungsmittels gestoppt wird.

4. Verfahren nach den Ansprüchen 1 bis 3, **dadurch gekennzeichnet, dass** die hochdisperse Kieselsäure eine pyrogene Kieselsäure ist.

5. Verfahren nach den Ansprüchen 1 bis 4, **dadurch gekennzeichnet, dass** der Anteil der hochdispersen Kieselsäure 70 - 95 Gew.-%, bezogen auf die Wärmedämm-Mischung, ist.

6. Verfahren nach den Ansprüchen 1 bis 5, **dadurch gekennzeichnet, dass** der Anteil des IR-Trübungsmittels 2 - 20 Gew.-%, bezogen auf die Wärmedämm-Mischung, ist.

7. Verfahren nach den Ansprüchen 1 bis 6, **dadurch gekennzeichnet, dass** der Anteil des Fasermateriales 3 - 10 Gew.-%, bezogen auf die Wärmedämm-Mischung, ist.

8. Verfahren nach den Ansprüchen 1 bis 7, **dadurch gekennzeichnet, dass** das Hydrophobierungsmittel eine siliciumorganische Verbindung aus der Gruppe bestehend aus Rₙ-Si-X₄₋ₙ, R₃Si-Y-SiR₃, mit n = 1 - 3; R = -CH₃, -C₂H₅; X = -Cl, -Br; -OCH₃, -OC₂H₅, -OC₃H₈, Y= NH, O ist.

9. Verfahren nach den Ansprüchen 1 bis 8, **dadurch gekennzeichnet, dass** der Anteil des Hydrophobierungsmittels, bezogen auf den hydrophilen Wärmedämm-Formkörper, 0,5 - 10 Gew.-% beträgt.

## Claims

1. Process for the production of a hydrophobic thermal-insulation moulding, in which a hydrophilic thermal-insulation moulding composed of a thermal-insulation mixture comprising a fine-particle silica, IR opacifier and fibre material is brought into contact with a hydrophobizing agent in vapour form with formation of a thermal-insulation moulding coated with hydrophobizing agent, and this is then subjected to a press process and during the press process and after the press process is reacted with the hydrophobizing agent with formation of the hydrophobic thermal-insulation moulding, where the density of the hydrophobic thermal-insulation moulding after the press process and after the reaction with the hydrophobizing agent is from 100 to 250 kg/m³,
**characterized in that**
the thermal-insulation body is a thermal-insulation sheet, and the process is carried out continuously by
the contact, the press process and the hydrophobizing reacting taking place between two gas-permeable, moving belts of a press,
wherein the contact between the hydrophilic thermal-insulation sheet and the hydrophobizing agent, and the reaction of the hydrophobizing agent, is achieved in a chamber surrounding the belt when the density of the hydrophilic thermal-insulation sheet on contact with the hydrophobizing agent is from 50% to less than 100% of the density of the hydrophobic thermal-insulation moulding, and the hydrophilic thermal-insulation sheet with its coating of hydrophobizing agent is subjected to a press process to give the final density, and after the press process is reacted at elevated temperature, where the contact temperature T_{contact} is from -30°C to 150°C and
the reaction temperature T_{reaction} is from 50°C to 500°C.

2. Process according to Claim 1, **characterized in that** the contact time and the reaction time are in each case from 1 minute to 1 hour.

3. Process according to Claim 1 or 2, **characterized in that** the contact and the reaction of the hydrophobizing agent with the hydrophilic thermal-insulation moulding takes place in a chamber, and the hydrophobizing agent here is introduced into the chamber until the pressure difference Δp is ≥ 20 mbar, where Δp = p₂ - p₁, and p₁ = pressure in the chamber before introduction of the hydrophobizing agent, p₂ = pressure in the chamber at which the introduction of the hydrophobizing agent is stopped.

4. Process according to Claims 1 to 3, **characterized in that** the fine-particle silica is a fumed silica.

5. Process according to Claims 1 to 4, **characterized in that** the proportion of the fine-particle silica, based on the thermal-insulation mixture, is from 70 to 95% by weight.

6. Process according to Claims 1 to 5, **characterized in that** the proportion of the IR opacifier, based on the thermal-insulation mixture, is from 2 to 20% by weight.

7. Process according to Claims 1 to 6, **characterized in that** the proportion of the fibre material, based on the thermal-insulation mixture, is from 3 to 10% by weight.

8. Process according to Claims 1 to 7, **characterized in that** the hydrophobizing agent is an organosilicon compound from the group consisting of Rₙ-Si-X₄₋ₙ, R₃Si-Y-SiR₃, where n = from 1 to 3; R = -CH₃, -C₂H₅; X = -Cl, -Br; -OCH₃, -OC₂H₅, -OC₃H₈, Y= NH, O.

9. Process according to Claims 1 to 8, **characterized in that** the proportion of the hydrophobizing agent, based on the hydrophilic thermal-insulation moulding, is from 0.5 to 10% by weight.

## Revendications

1. Procédé de fabrication d'un corps moulé d'isolation thermique hydrophobe, selon lequel un corps moulé d'isolation thermique hydrophile qui est constitué par un mélange d'isolation thermique qui contient une silice hautement dispersée, un agent opacifiant IR et une matière fibreuse est mis en contact avec un agent d'hydrophobation sous forme vapeur avec formation d'un corps moulé d'isolation thermique revêtu avec l'agent d'hydrophobation, puis celui-ci est comprimé et mis en réaction pendant la compression et après la compression avec l'agent d'hydrophobation avec formation du corps moulé d'isolation thermique hydrophobe, le corps moulé d'isolation thermique hydrophobe présentant après la compression et après la réaction avec l'agent d'hydrophobation une densité de 100 à 250 kg/m³,
**caractérisé en ce que**
le corps moulé d'isolation thermique est une plaque d'isolation thermique et
le procédé est réalisé en continu **en ce que** la mise en contact, la compression et la réaction d'hydrophobation ont lieu entre deux bandes continues perméables aux gaz d'une presse,
la mise en contact de la plaque d'isolation thermique hydrophile avec l'agent d'hydrophobation et la réaction de l'agent d'hydrophobation ayant lieu dans une chambre entourant la bande lorsque la plaque d'isolation thermique hydrophile présente lors de la mise en contact avec l'agent d'hydrophobation une densité qui est de 50 % à moins de 100 % de la densité du corps moulé d'isolation thermique hydrophobe, et la plaque d'isolation thermique hydrophile revêtue avec l'agent d'hydrophobation étant comprimée jusqu'à la densité finale, et mise en réaction à température élevée après la compression,
la température de la mise en contact T_{contact} étant de -30 °C à 150 °C, et
la température de réaction T_{réaction} étant de 50 °C à 500 °C.

2. Procédé selon la revendication 1, **caractérisé en ce que** la durée de la mise en contact et la durée de la réaction sont chacune de 1 minute à 1 heure.

3. Procédé selon la revendication 1 ou 2, **caractérisé en ce que** la mise en contact et la réaction de l'agent d'hydrophobation avec le corps moulé d'isolation thermique hydrophile ont lieu dans une chambre, l'agent d'hydrophobation étant introduit dans la chambre jusqu'à ce que la différence de pression Δp soit ≥ 20 mbar, avec Δp = p₂ - p₁, et p₁ = pression dans la chambre avant l'introduction de l'agent d'hydrophobation, p₂ = pression dans la chambre à laquelle l'introduction de l'agent d'hydrophobation est arrêtée.

4. Procédé selon les revendications 1 à 3, **caractérisé en ce que** la silice hautement dispersée est une silice pyrogénée.

5. Procédé selon les revendications 1 à 4, **caractérisé en ce que** la proportion de la silice hautement dispersée est de 70 à 95 % en poids, par rapport au mélange d'isolation thermique.

6. Procédé selon les revendications 1 à 5, **caractérisé en ce que** la proportion de l'agent opacifiant IR est de 2 à 20 % en poids, par rapport au mélange d'isolation thermique.

7. Procédé selon les revendications 1 à 6, **caractérisé en ce que** la proportion de la matière fibreuse est de 3 à 10 % en poids, par rapport au mélange d'isolation thermique.

8. Procédé selon les revendications 1 à 7, **caractérisé en ce que** l'agent d'hydrophobation est un composé organique de silicium du groupe constitué par Rₙ-Si-X₄₋ₙ, R₃Si-Y-SiR₃, avec n = 1 à 3 ; R = -CH₃, -C₂H₅ ; X = -Cl, -Br ; -OCH₃, -OC₂H₅, -OC₃H₈ ; Y = NH, O.

9. Procédé selon les revendications 1 à 8, **caractérisé en ce que** la proportion de l'agent d'hydrophobation, par rapport au corps moulé d'isolation thermique hydrophile, est de 0,5 à 10 % en poids.
